# EUROPEAN PATENT APPLICATION

(11) **EP 4 800 769 A1**
(43) Date of publication of application: **02.09.2026**
(21) Application number: 24882913.7
(22) Date of filing: 25.10.2024
(51) Int. Cl.: H01M 4/525, H01M 4/505, H01M 10/052, H01M 4/02

(54) **CATHODE MATERIAL FOR LITHIUM SECONDARY BATTERY AND METHOD OF MANUFACTURING SAME**

(30) Priority: 27.10.2023 KR 20230145606
(71) Applicant: Posco Future M Co., Ltd., Pohang-si, Gyeongsangbuk-do 37918 (KR)
(72) Inventor: SEO, Ju Won, Pohang-si, Gyeongsangbuk-do 37918 (KR); AHN, Jungyoung, Pohang-si, Gyeongsangbuk-do 37918 (KR); KIM, Hyunjin, Pohang-si, Gyeongsangbuk-do 37918 (KR); PARK, Hyewon, Pohang-si, Gyeongsangbuk-do 37918 (KR); SHIN, Dongmin, Pohang-si, Gyeongsangbuk-do 37918 (KR); KIM, Deuksu, Pohang-si, Gyeongsangbuk-do 37918 (KR)
(74) Representative: Pfenning, Meinig & Partner mbB
(86) International application number: PCT/KR2024/016452
(87) International publication number: WO 2025/089887

(57) **Abstract**

The present invention relates to a positive electrode material for a lithium secondary battery, wherein the positive electrode material for a lithium secondary battery comprises a positive electrode active material including lithium metal oxide particles including lithium, nickel, cobalt, and manganese, and in a first roughness measured as an average value of the active material in a randomly selected area of 40 *µ*m × 40 *µ*m, an average roughness (Ra) of a surface of the positive electrode material may be 1.0 *µ*m or less.

## Description

### [TECHNICAL FIELD]

The present invention relates to a lithium secondary battery, and more particularly, to a positive electrode material for a lithium secondary battery.

### [BACKGROUND ART]

As technology development and demand for mobile devices increase, the demand for secondary batteries as an energy source is rapidly increasing. Among secondary batteries, lithium secondary batteries exhibiting high energy density and operating potential, long cycle life, and low self-discharge rate have been commercialized and widely used.

In addition, as interest in environmental issues grows, there is an increasing interest in electric vehicles and hybrid electric vehicles that can replace vehicles using fossil fuels, such as gasoline and diesel vehicles, which are one of the main causes of air pollution. Research on using lithium secondary batteries as a power source for the electric vehicles and the hybrid electric vehicles is actively underway.

A lithium secondary battery generally consists of a positive electrode including a positive electrode material, a negative electrode including a negative electrode material, a separator, and an electrolyte, and charging and discharging are performed by intercalation-deintercalation of lithium ions. The lithium secondary battery is applied to various fields because it has advantages such as high energy density, large electromotive force, and high capacity.

Specifically, as an effort to improve the performance of a positive electrode active material, a technology using a high-nickel NCM (nickel-cobalt-manganese) positive electrode material having a high Ni content has been proposed. However, conventional high-nickel NCM positive electrode materials are in the form of secondary particles in which primary particles are aggregated. Due to the large specific surface area of the powder, the contact area with the electrolyte is somewhat wide, which increases gas generation. Furthermore, the strength of the secondary particles is weak, leading to a problem where the secondary particles are broken into the form of primary particles during the rolling process of the electrode, thereby deteriorating cycle life characteristics.

Accordingly, a single-particle shaped positive electrode material has been devised to suppress the problem of cycle life deterioration in high-nickel NCM positive electrode materials by increasing the size of primary particles to reduce the specific surface area and increasing the strength of the particles.

However, when a single-particle shaped positive electrode material is manufactured using a conventional method, the pulverization process is not easy, and thus the form of secondary particles in which primary particles are clumped remains, which causes a problem of high residual lithium.

Since such residual lithium causes inferior electrochemical characteristics of a battery, it is necessary to remove residual lithium through an additional heat treatment.

Therefore, there is a demand for a method for manufacturing a positive electrode active material for a lithium secondary battery that can manufacture a single particle through a simple process while suppressing the generation of residual lithium.

### [DETAILED DESCRIPTION OF THE INVENTION]

### [TECHNICAL PROBLEM]

An object of an embodiment of the present invention is to provide a positive electrode material for a lithium secondary battery that includes a positive electrode active material having a low residual lithium content, thereby enabling the impartation of excellent electrochemical characteristics when applied to a lithium secondary battery, and that exhibits excellent uniformity during electrode manufacturing.

### [TECHNICAL SOLUTION]

According to an embodiment of the present invention, a positive electrode material for a lithium secondary battery comprises a positive electrode active material including lithium metal oxide particles including lithium, nickel, cobalt, and manganese, wherein in a first roughness measured as an average value of the active material in a randomly selected area of 40 *µ*m × 40 *µ*m, an average roughness (Ra) of a surface of the positive electrode material may be 1.0 *µ*m or less.

In one embodiment, in the first roughness, an Rpv (peak to valley ratio) may be 9.0 *µ*m or less. In one embodiment, in the first roughness, a root-mean-square roughness (Rq) may be 1.20 µm or less.

In one embodiment, in a second roughness measured for an individual single particle in an electrode state, an average roughness (Ra) of the surface of the positive electrode material may be 0.20 *µ*m or less. In one embodiment, in a second roughness measured for an individual single particle in the electrode state, an Rpv (peak to valley ratio) may be 0.90 *µ*m or less.

In one embodiment, in a second roughness measured for an individual single particle in the electrode state, a root-mean-square roughness (Rq) may be 0.25 *µ*m or less. In one embodiment, the positive electrode active material may satisfy the following Equation 1: $A - B \leq 1.30$ (In Equation 1, A is a sum of fine powder values of 1 *µ*m or less after pressing when 3 g of a sample of the positive electrode active material is introduced into a 1.3 cm diameter mold and pressed at 9 tons, and B is a sum of fine powder values of 1 *µ*m or less before pressing.)

In one embodiment, an average particle diameter (D₅₀) may be 4.0 to 5.0 *µ*m. In one embodiment, a specific surface area may be 0.40 to 0.55 m²/g. In one embodiment, the positive electrode active material may be a single particle. In one embodiment, a content of the nickel may be 0.85 mol or more based on 1 mol of a total of the nickel, manganese, and doping elements.

### [ADVANTAGEOUS EFFECTS]

A positive electrode material for a lithium secondary battery according to an embodiment of the present invention comprises a positive electrode active material and exhibits excellent particle uniformity, such that the average roughness (Ra) of the surface of the positive electrode material satisfies 1.0 *µ*m or less. Accordingly, a positive electrode material capable of manufacturing a battery with excellent electrochemical characteristics and high energy density can be provided.

### [BRIEF DESCRIPTION OF DRAWINGS]

FIGS. 1 to 6 are SEM images of calcinated products manufactured according to Preparation Examples.
FIGS. 7 and 8 are SEM images of positive electrode active materials for a lithium secondary battery manufactured according to Examples and Comparative Examples.
FIG. 9 is a graph showing particle sizes of positive electrode active materials for a lithium secondary battery manufactured according to Examples and Comparative Examples.
FIGS. 10a to 10d show a first roughness as an electrode surface roughness measured by an Atomic Force Microscope (AFM) in a randomly selected area of 40 *µ*m × 40 *µ*m on an electrode of an Example, and FIGS. 10e to 10h show a first roughness as an electrode surface roughness measured by an AFM in a randomly selected area of 40 *µ*m × 40 *µ*m on an electrode of a Comparative Example.
FIGS. 11a and 11b, 11c and 11d, 11e and 11f, 11g and 11h, 11i and 11j, 11k and 11l, 11m and 11n, and 11o and 11p show a second roughness as a roughness of a one single particle on an electrode surface measured by an Atomic Force Microscope (AFM) according to lines 1 to 4 of Examples and lines 1 to 4 of Comparative Examples, respectively.

### [DETAILED DESCRIPTION OF THE INVENTION]

Terms such as first, second, and third are used to describe various parts, components, regions, layers, and/or sections, but are not limited thereto. These terms are only used to distinguish one part, component, region, layer, or section from another part, component, region, layer, or section. Accordingly, a first part, component, region, layer, or section described below may be referred to as a second part, component, region, layer, or section without departing from the scope of the present invention.

Technical terms used herein are only for referring to specific embodiments and are not intended to limit the present invention. Singular forms used herein include plural forms as well, unless the context clearly indicates otherwise. The meaning of "including" or "comprising" used in the specification specifies a specific characteristic, region, integer, step, operation, element, and/or component, and does not exclude the presence or addition of other characteristics, regions, integers, steps, operations, elements, and/or components.

When a part is referred to as being "on" or "above" another part, it may be directly on or above the other part, or another part may be interposed therebetween. In contrast, when a part is referred to as being "directly on" another part, no other part is interposed therebetween.

Unless defined otherwise, all terms including technical and scientific terms used herein have the same meaning as commonly understood by one of ordinary skill in the art to which the present invention pertains. Terms defined in commonly used dictionaries are further interpreted as having a meaning consistent with the related technical literature and the currently disclosed content, and are not interpreted in an ideal or very formal sense unless defined.

Hereinafter, embodiments of the present invention will be described in detail. However, these are presented as examples, and the present invention is not limited thereto, but is only defined by the scope of the claims to be described later.

A positive electrode material for a lithium secondary battery according to an embodiment of the present invention may comprise a positive electrode active material including lithium metal oxide particles including lithium, nickel, cobalt, and manganese. Specifically, the positive electrode material for a lithium secondary battery may comprise a positive electrode active material including lithium metal oxide particles.

In one embodiment, the positive electrode material for a lithium secondary battery may have a first roughness, which is an electrode surface roughness measured in a randomly selected area of 40 *µ*m × 40 *µ*m on an electrode, having the following characteristics. Specifically, the first roughness may be an index for showing that the positive electrode active material is uniformly filled in the electrode.

In one embodiment, in the first roughness, an average roughness (Ra) of the electrode surface may be 1.0 *µ*m or less. Specifically, Ra refers to the area between an actual surface and a center line, that is, the sum of absolute values of heights of a surface profile in a measurement section. The Ra may be 1.0 *µ*m or less, specifically 0.3 to 0.9 *µ*m, and more specifically 0.4 to 0.8 *µ*m.

In one embodiment, in the first roughness, a peak to valley ratio (Rpv), which is a height difference between a highest point and a lowest point of the electrode surface, may be 9.0 *µ*m or less. Specifically, Rpv refers to a difference value between a Max value, which means the highest value among measurement values, and a Min value, which means the lowest value among the measurement values. The Rpv may be 9.0 *µ*m or less, specifically 2.0 to 8.0 *µ*m, and more specifically 3.0 to 7.0 *µ*m.

In one embodiment, in the first roughness, a root-mean-square roughness (Rq) of the electrode surface may be 1.20 µm or less. The root-mean-square roughness refers to a square root of a value obtained by summing all squared height values and then dividing the sum by a line length. The root-mean-square roughness may be 1.20 *µ*m or less, specifically 0.5 to 1.10 *µ*m, and more specifically 0.7 to 1.00 *µ*m.

If the first roughness exceeds the upper limit of the aforementioned roughness index range, it means that the uniformity of particles decreases, which leads to a decrease in an electrode loading amount and a mixture density and causes voids, thereby causing electrochemical characteristic deterioration and energy density reduction when a battery is manufactured. If the first roughness is below the lower limit of the aforementioned roughness index range, it means that the growth of particles is reduced, leading to small sizes or increased fine powders. This results in increased NMP absorption during an electrode manufacturing step, thereby lowering solid content, causing problems in slurry preparation, and decreasing mixture density, which leads to electrochemical characteristic deterioration and energy density reduction.

In one embodiment, a second roughness, which refers to a particle surface roughness for one active material in an electrode state of the positive electrode material, may have the following characteristics. Specifically, the second roughness refers to a particle surface roughness for one active material in the electrode state and refers to a roughness measured in a range that does not include other particles.

In one embodiment, in the second roughness, an average roughness (Ra) of the surface of the positive electrode material may be 0.20 *µ*m or less. The Ra may be 0.20 *µ*m or less, specifically 0.18 *µ*m or less, and more specifically 0.16 *µ*m or less.

In one embodiment, in the second roughness, a peak to valley ratio (Rpv) of the surface of the positive electrode material may be 0.8 *µ*m or less. The Rpv may be 0.80 *µ*m or less, specifically 0.70 *µ*m or less, and more specifically 0.60 *µ*m or less.

In one embodiment, in the second roughness, a root-mean-square roughness (Rq) of the surface of the positive electrode material may be 0.25 *µ*m or less. The Rq may be 0.25 *µ*m or less, specifically 0.2 *µ*m or less, and more specifically 0.18 *µ*m or less.

Since the aforementioned roughness indices in the second roughness satisfy the aforementioned ranges, it can be determined that the growth and uniformity of particles are excellent. Accordingly, high filling degree and low surface roughness are achieved during electrode manufacturing, providing an advantage that a high energy density battery can be manufactured due to high loading values and mixture density when manufactured into a battery.

A positive electrode active material for a lithium secondary battery according to an embodiment of the present invention may comprise lithium metal oxide particles. Specifically, the positive electrode active material for a lithium secondary battery may include metal oxides such as lithium, nickel, cobalt, and manganese.

In one embodiment, the positive electrode active material for a lithium secondary battery may have a layered crystal structure. Specifically, it may include a lithium layer in the crystal structure of the lithium metal oxide.

In one embodiment, a cation mixing ratio of nickel cations in a lithium layer within the crystal structure of the lithium metal oxide may be 1.0 to 1.8%, and specifically 1.2 to 1.6%.

Since the nickel cation mixing ratio in the lithium layer of the positive electrode active material for a lithium secondary battery satisfies the aforementioned range, a phenomenon in which the lithium layer collapses and cycle life characteristics decrease can be suppressed. In addition, it is possible to suppress a phenomenon in which resistance characteristics and output characteristics are deteriorated due to a decrease in lithium ion mobility caused by an increase in irreversible sites in a bulk portion of the positive electrode active material for a lithium secondary battery.

In one embodiment, the positive electrode active material for a lithium secondary battery may be in a single particle form. The term "single particle" is used to distinguish from positive electrode active material particles in a secondary particle form formed by aggregation of tens to hundreds of primary particles commonly used in the past, and may be a concept including a single particle composed of one primary particle and an aggregate particle of 30 or fewer primary particles.

The primary particle refers to a minimum particle unit distinguished as one lump when a cross-section of the positive electrode active material is observed through a scanning electron microscope (SEM), and may be composed of one grain or a plurality of grains. Here, the grain refers to a region distinguished in a form in which atoms within a primary particle form a lattice structure in a certain direction. In addition, the secondary particle refers to an aggregate, i.e., a secondary structure, in which tens to hundreds of primary particles are aggregated by physical or chemical bonding between primary particles even without an intentional aggregation or assembly process for the primary particles.

In one embodiment, the positive electrode active material for a lithium secondary battery may include a doping element. The doping element may include, for example, at least one of zirconium (Zr) and yttrium (Y).

When the zirconium is contained as the doping element, it suppresses the diffusion of Ni²⁺ into Li⁺ sites, preventing transformation from a layered structure to a spinel structure, thereby lowering a cation mixing degree and improving structural stability. In addition, there is an advantage of increasing charge/discharge capacity and thermal stability by reducing the concentration of Ni³⁺ ions.

A doping amount of the zirconium in the lithium metal oxide particles may be 1000 to 4000 ppm, preferably 1500 to 3500 ppm, and more preferably 2000 to 3000 ppm.

When the zirconium is included within the above range, it can stabilize the layered structure by alleviating the contraction of a lithium ion path during charging and discharging processes of a battery. Accordingly, a cation mixing ratio can be lowered, and as a result, resistance characteristics and cycle life characteristics can be improved.

When the yttrium is contained as the doping element, it can stabilize the structure during a discharging process of a lithium secondary battery to alleviate voltage hysteresis, and as a result, there is an advantage of improving cycle life characteristics.

A doping amount of the yttrium in the lithium metal oxide particles may be 500 to 2000 ppm, preferably 700 to 1800 ppm, and more preferably 1000 to 1500 ppm. When the yttrium is included within the above range, grain growth can be promoted to efficiently increase a grain size within a single particle and an average particle size of the single particle.

In one embodiment, the doping element may further include at least one selected from the group consisting of B, Al, Mg, Ti, Nb, W, Sc, Si, V, Fe, Mo, Ce, Hf, Ta, La, and Sr, but is not limited thereto.

In one embodiment, the positive electrode active material for a lithium secondary battery may satisfy the following Chemical Formula 1:

[Chemical Formula 1] Liₐ[NiₓCo_{γ}Mn_{z}M_{w}]O₂

In Chemical Formula 1, M is at least one of Zr and Y, 0.8≤a≤1.3, 0.8≤x<1, 0<y<0.08, 0<z<0.08, 0<w≤0.04, and x+y+z+w=1. Specifically 0.001≤w≤0.01, and more specifically 0.002≤w≤0.008.

In one embodiment, the content of the nickel may be 0.85 mol or more based on 1 mol of a total of the nickel, cobalt, manganese, and doping elements. Specifically, the content of the nickel may be 0.90 mol or more.

The positive electrode active material for a lithium secondary battery according to the present invention can implement a high-nickel positive electrode active material by including the aforementioned nickel content. Specifically, the positive electrode active material for a lithium secondary battery may be a high-nickel positive electrode active material containing nickel and manganese.

In one embodiment, the positive electrode active material for a lithium secondary battery may have an average particle diameter (D₅₀) of 3.0 to 5.0 µm. Specifically, it may be 3.5 to 4.5 µm. The average particle diameter (D₅₀) refers to a particle diameter corresponding to 50% of a volume cumulative amount in a particle size distribution curve of particles. The average particle diameter (D₅₀) may be measured using, for example, a laser diffraction method.

In one embodiment, the positive electrode active material for a lithium secondary battery may have a specific surface area of 0.40 to 0.55 m²/g. Specifically, it may be 0.42 to 0.53 m²/g. The specific surface area is a BET specific surface area and can be measured using a BET method (Surface area and Porosity analyzer) (Micromeritics, ASAP2020).

Since the specific surface area satisfies the aforementioned range, a problem of cycle life deterioration as particle strength of the positive electrode active material for a lithium secondary battery increases can be suppressed. If the specific surface area is outside the aforementioned range, there is a problem that electrochemical characteristics of the positive electrode active material are deteriorated.

In one embodiment, the positive electrode active material for a lithium secondary battery may have a residual lithium amount of 0.80 wt% or less based on 100 wt% of the total weight of the positive electrode active material. Specifically, the residual lithium amount may be 0.50 wt% or less, more specifically 0.45 wt% or less, and even more specifically 0.4 wt% or less. The residual lithium amount can be measured using an automatic titrator.

Since the residual lithium amount satisfies the aforementioned range, a positive electrode active material for a lithium secondary battery having excellent electrochemical characteristics can be provided. If the residual lithium is outside the aforementioned range, there is a problem that the electrochemical characteristics of the positive electrode active material for a lithium secondary battery become inferior.

In one embodiment, the positive electrode active material for a lithium secondary battery may satisfy the following Equation 1: $A - B \leq 1.30$ (In Equation 1, A is a sum of fine powder values of 1 *µ*m or less after pressing when 3 g of a sample of the positive electrode active material is introduced into a 1.3 cm diameter mold and pressed at 9 tons, and B is a sum of fine powder values of 1 *µ*m or less before pressing.)

Equation 1 may be an index indicating an increase in fine powder of the active material. Equation 1 may be 0.80 to 1.30, specifically 0.85 to 1.20, more specifically 0.90 to 1.10, and even more specifically 0.95 to 1.05. By satisfying Equation 1, there is an advantage that the single-particle degree of the positive electrode active material for a lithium secondary battery is improved. If Equation 1 is outside the aforementioned range, there is a problem that the single-particle degree of the active material drops and fine powder increases.

In one embodiment, in Equation 1, a value of A, which is the sum of fine powder values of 1 µm or less after pressing when 3 g of a sample of the positive electrode active material is introduced into a 1.3 cm diameter mold and pressed at 9 tons, may be 1.20 to 2.50. Specifically, the A value may be 1.40 to 1.90, and more specifically 1.50 to 1.80.

In one embodiment, in Equation 1, a value of B, which is the sum of fine powder values of 1 µm or less before pressing when 3 g of a sample of the positive electrode active material is introduced into a 1.3 cm diameter mold and pressed at 9 tons, may be 0.5 to 0.9. Specifically, the B value may be 0.6 to 0.8, and more specifically 0.65 to 0.75.

The A and B values may be characteristics of a positive electrode active material manufactured by performing a first calcination at a temperature in the range of 840 to 860 °C, followed by a deagglomeration process and a second calcination, in the method for manufacturing a positive electrode active material for a lithium secondary battery. If the A and B values are outside the aforementioned ranges, there is a problem that the single-particle degree of the active material drops and fine powder increases.

In one embodiment, the positive electrode active material for a lithium secondary battery may include LiOH and Li₂CO₃. Accordingly, the positive electrode active material for a lithium secondary battery may include a predetermined content of residual lithium.

A method for manufacturing a positive electrode active material for a lithium secondary battery according to another embodiment of the present invention may comprise: forming a mixture including a metal hydroxide precursor and a lithium raw material; performing a first calcination of the mixture to obtain a calcinated product; deagglomerating the calcinated product to obtain a metal oxide; and performing a second calcination of the metal oxide to obtain lithium metal oxide particles. The method for manufacturing a positive electrode active material for a lithium secondary battery of the present invention can simplify the process compared to conventional single particle manufacturing methods and has the advantage of not requiring an additional heat treatment process due to low residual lithium, by deagglomerating secondary particles in which primary particles are clumped after the first calcination and then growing single particles in the subsequent second calcination.

In the method for manufacturing a positive electrode active material for a lithium secondary battery, the step of forming a mixture including a metal hydroxide precursor and a lithium raw material may be a step of mixing the raw materials before the calcination step.

In one embodiment, the metal hydroxide precursor may be a plate-shaped precursor. The plate-shaped precursor is defined as a form in which primary particles have two relatively flat surfaces, and refers to a precursor including not only a complete plate shape but also a flake shape similar to a plate as the primary particles.

In one embodiment, the metal hydroxide precursor may contain at least one selected from the group consisting of Ni, Co, and Mn. Specifically, the metal hydroxide precursor may be purchased and used, or may be directly manufactured and used using a common method performed in the art.

For example, the metal hydroxide precursor may be manufactured by adding a complexing agent-containing solution and a pH adjuster-containing solution to a metal-containing solution including a nickel raw material, a manganese raw material, or a cobalt raw material to perform a co-precipitation reaction, but is not limited thereto.

The nickel raw material is not particularly limited as long as it is used in the art for manufacturing a positive electrode active material precursor. For example, the nickel raw material may be a nickel-containing sulfate, acetate, nitrate, halide, sulfide, hydroxide, oxide, or oxyhydroxide, and specifically may be NiSO₄, NiSO₄·6H₂O, Ni(OH)₂, NiO, NiOOH, NiCO₃·2Ni(OH)₂·4H₂O, NiC₂O₂·2H₂O, Ni(NO₃)₂·6H₂O, a fatty acid nickel salt, a nickel halide, or a combination thereof, but is not limited thereto.

The cobalt raw material is not particularly limited as long as it is used in the art for manufacturing a positive electrode active material precursor. For example, the cobalt raw material may be a cobalt-containing sulfate, acetate, nitrate, halide, sulfide, hydroxide, oxide, or oxyhydroxide, and specifically may be CoSO₄, CoSO₄·7H₂O, Co(OH)₂, CoOOH, Co(OCOCH₃)₂·4H₂O, Co(NO₃)₂·6H₂O, or a combination thereof, but is not limited thereto.

The manganese raw material is not particularly limited as long as it is used in the art for manufacturing a positive electrode active material precursor. For example, the manganese raw material may be a manganese-containing sulfate, acetate, nitrate, halide, sulfide, hydroxide, oxide, oxyhydroxide, or a combination thereof, and specifically may be MnSO₄, MnCO₃, Mn(NO₃)₂, manganese acetate, a dicarboxylic acid manganese salt, manganese citrate, a manganese salt such as a fatty acid manganese salt, a manganese oxide such as Mn₂O₃, MnO₂, or Mn₃O₄, an oxyhydroxide, manganese chloride, or a combination thereof, but is not limited thereto.

The metal-containing solution may be manufactured by adding a nickel raw material, a manganese raw material, or a cobalt raw material to a solvent, specifically water, or a mixture of water and an organic solvent (e.g., alcohol, etc.) that can be uniformly mixed with water.

The complexing agent-containing solution plays a role in complex formation and may include, for example, NH₃, NH₄OH, (NH₄)₂SO₄, NH₄NO₃, NH₄Cl, CH₃COONH₄, NH₄CO₃, or a combination thereof as a complexing agent, but is not limited thereto. Meanwhile, the complexing agent-containing solution may be used in the form of an aqueous solution, and in this case, water or a mixture of water and an organic solvent (e.g., alcohol, etc.) that can be uniformly mixed with water may be used as a solvent.

The pH adjuster-containing solution plays a role as a precipitant or pH adjuster and may include an alkaline compound such as a hydroxide of an alkali metal or alkaline earth metal such as NaOH, KOH, or Ca(OH)₂, a hydrate thereof, or a combination thereof. Meanwhile, the pH adjuster-containing solution may also be used in the form of an aqueous solution, and in this case, water or a mixture of water and an organic solvent (e.g., alcohol, etc.) that can be uniformly mixed with water may be used as a solvent. In this case, the pH adjuster-containing solution may be added in an amount such that the pH of the reaction solution is 10 to 13.

The co-precipitation reaction may be performed under an inert atmosphere such as nitrogen or argon, and may be performed at a temperature of 30 to 70 °C and at a pH of 10 to 13.

Through the aforementioned processes, particles of nickel (-or manganese-cobalt) hydroxide are generated and precipitated in the reaction solution. The precipitated precursor particles are separated according to a common method, washed with water, and dried to obtain a precursor.

In this case, a molar ratio of nickel, cobalt, or manganese in the precursor can be controlled by adjusting the concentration of the nickel raw material, the cobalt raw material, or the manganese raw material. That is, the concentrations of the nickel raw material, the cobalt raw material, and the manganese raw material can be adjusted so that the molar ratio of nickel, cobalt, or manganese in the final product, lithium metal oxide, is within the range according to the present invention.

As the lithium raw material, a lithium-containing sulfate, nitrate, acetate, carbonate, oxalate, citrate, halide, hydroxide, oxyhydroxide, or the like may be used, and it is not particularly limited as long as it can be dissolved in water. Specifically, the lithium raw material may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a combination thereof, but is not limited thereto.

The lithium raw material may be added such that a molar ratio of lithium to the total metal in the metal hydroxide precursor and the doping element (Li/Me) is 1.02 to 1.08, and preferably 1.02 to 1.05.

While not wishing to be bound by theory, the lithium raw material may be partially lost during an oxidation process. It is preferable when the input amount of the lithium raw material satisfies the aforementioned range because a positive electrode active material for a lithium secondary battery having a target composition can be obtained.

In one embodiment, in the step of forming a mixture, the mixture may include a doping element. The doping element may contain at least one selected from the group consisting of zirconium and yttrium.

In one embodiment, the doping element may further include at least one selected from the group consisting of B, Al, Mg, Ti, Nb, W, Sc, Si, V, Fe, Mo, Ce, Hf, Ta, La, and Sr in addition to the zirconium and yttrium, but is not limited thereto. For a detailed description of the doping element, reference may be made to the content of the positive electrode active material for a lithium secondary battery described above.

The step of performing a first calcination of the mixture to obtain a calcinated product may be performed at 830 to 870 °C. Specifically, the first calcination step may be performed at 840 to 860 °C.

When the first calcination is performed in the aforementioned temperature range, a phenomenon in which overgrown particles or undergrown particles are generated can be suppressed, and the cation mixing ratio of nickel cations in the lithium layer within the crystal structure of the lithium metal oxide particles can be easily controlled.

If the first calcination temperature exceeds the upper limit of the aforementioned range, there is a problem that particles grow excessively and are not properly ground and deagglomerated. If the first calcination temperature is below the lower limit of the aforementioned range, there is a problem that particles are undergrown and are not properly ground and deagglomerated.

In one embodiment, the first calcination may be performed for 2 to 6 hours. Specifically, the first calcination may be performed for 3 to 5 hours.

Since the first calcination is performed in the aforementioned time range, a positive electrode active material grown to a grain size suitable for grinding and deagglomeration can be easily obtained. If the time exceeds the upper limit of the aforementioned range, there is a problem that particles grow excessively and are not properly ground and deagglomerated. If the time is below the lower limit of the aforementioned range, there is a problem that particles are undergrown and are not properly ground and deagglomerated.

In one embodiment, in the step of performing a first calcination to obtain a calcinated product, the calcinated product may satisfy the following Equation 2: $1.00 \leq C - D \leq 5.00$ (In Equation 2, C is a sum of fine powder values of 1 *µ*m or less after pressing when 3 g of a sample of the first calcinated product is introduced into a 1.3 cm diameter mold and pressed at 9 tons, and D is a sum of fine powder values of 1 *µ*m or less before pressing.)

Equation 2 may be an index of (particle growth in the first calcination). Equation 2 may be 1.00 to 5.00, specifically 1.20 to 4.80, and more specifically 1.50 to 4.50. By satisfying Equation 2, there is an advantage suitable for grinding and deagglomeration after the first calcination of the positive electrode active material for a lithium secondary battery.

If Equation 2 exceeds the upper limit of the aforementioned range, there is a problem that particles are undergrown and are not properly ground and deagglomerated. If Equation 2 is below the lower limit of the aforementioned range, there is a problem that particles grow excessively and are not properly ground and deagglomerated.

In one embodiment, a Li/Ni cation mixing degree of the calcinated product obtained in the step of performing a first calcination to obtain the calcinated product may satisfy 1.3 to 2.1%. Specifically, the mixing degree may be 1.4 to 2.1, and more specifically 1.5 to 2.0.

Since the mixing degree of the first calcinated product satisfies the aforementioned range, there is an advantage that a phenomenon in which the lithium layer collapses and cycle life characteristics of a battery decrease is reduced. Since the mixing degree satisfies the aforementioned range, it is preferable because a phenomenon in which lithium ion mobility is lowered and resistance characteristics and output characteristics are deteriorated can be suppressed.

The step of deagglomerating the calcinated product to obtain a metal oxide may be a step of grinding and deagglomerating the calcinated product using a jet mill at a pressure of 2.0 to 5.0 bar to obtain a metal oxide.

When the grinding and deagglomeration are performed at a pressure in the aforementioned range, a positive electrode active material in a single particle form grown through the second calcination to be described later has an appropriate particle size and can impart excellent cycle life characteristics when applied to a lithium secondary battery.

Compared to a rotor mill, ball mill, pin mill, bead mill, roll mill equipment, etc., the jet mill allows for grinding of various materials and has an advantage that dry grinding and deagglomeration for the material are possible without contamination. In particular, since various particle sizes can be controlled, there is an advantage that quality control with the same particle size is possible during repeated production.

The step of grinding and deagglomerating the calcinated product using a jet mill at a pressure of 2.0 to 5.0 bar to obtain a metal oxide may further include a step of deagglomerating the calcinated product using a rotor mill, ball mill, pin mill, bead mill, roll mill equipment, etc. beforehand, but is not limited thereto.

Deagglomeration conditions for the step of deagglomerating using the rotor mill, ball mill, pin mill, bead mill, roll mill equipment, etc. may be appropriately performed within a range that does not impair the object of the present invention, and are not particularly limited in the present invention.

Deagglomeration is generally performed after calcination is completed, but the method for manufacturing a positive electrode active material for a lithium secondary battery according to the present invention undergoes a deagglomeration step, specifically a grinding and deagglomeration step, between the first calcination and the second calcination.

In one embodiment, the grinding and deagglomeration may be performed by cooling the calcinated product to a temperature of 50 to 200 °C, specifically 50 to 100 °C. Cooling to the cooling temperature may be performed at room temperature, and when cooling to the cooling temperature, reaction between external moisture and the calcinated product can be suppressed and an increase in residual lithium can be suppressed.

The step of performing a second calcination of the metal oxide to obtain lithium metal oxide particles may be performed at 750 to 830 °C. Specifically, the second calcination may be performed in a range of 760 to 820 °C, and more specifically 770 to 810 °C. When the second calcination is performed in the aforementioned calcination temperature range, a crystal structure of the obtained lithium metal oxide particles can be stabilized.

Specifically, as lithium by-products remaining on surfaces of the lithium metal oxide particles are decomposed by heat and diffuse into the lithium metal oxide particles, an amount of lithium remaining on the surfaces is reduced. As lithium ions and the surfaces of the lithium metal oxide particles react to form a stable layered structure, surface structures of the lithium metal oxide particles are stabilized, thereby providing advantages of improving side reactions with an electrolyte, resistance, and cycle life characteristics.

The second calcination may be performed for 8 to 12 hours, but is not limited thereto. It is preferable when the second calcination is performed within the aforementioned time range because a phenomenon in which lithium by-products remaining on the surfaces of the lithium metal oxide particles are decomposed by heat and diffuse into the lithium metal oxide particles is sufficient.

In one embodiment, a content of LiOH may be 0.40 wt% or less based on 100 wt% of the total weight of the positive electrode active material. Specifically, the content of LiOH may be 0.35 wt% or less.

The lithium metal oxide particles for which the second calcination is completed may further undergo a deagglomeration step, but are not limited thereto. In this case, deagglomeration may be performed using a rotor mill, ball mill, pin mill, bead mill, roll mill equipment, etc., and deagglomeration conditions are not particularly limited as long as they are within a range that does not impair the object of the present invention.

As described above, the positive electrode active material for a lithium secondary battery manufactured according to the method for manufacturing a positive electrode active material for a lithium secondary battery has an excellent advantage of not needing an additional heat treatment process due to low residual lithium and not needing separate washing and drying processes.

A lithium secondary battery according to another embodiment of the present invention provides a lithium secondary battery comprising: a positive electrode including the aforementioned positive electrode active material; a negative electrode; and a non-aqueous electrolyte.

The positive electrode includes a current collector and a positive electrode active material layer positioned on the current collector. The positive electrode active material layer includes a positive electrode active material, and the positive electrode active material may include the positive electrode active material for a lithium secondary battery according to an embodiment described above. In the positive electrode active material layer, the content of the positive electrode active material may be 90 wt% to 99 wt% based on the total weight of the positive electrode active material layer.

The positive electrode active material layer may further include a binder and/or a conductive material. In this case, the contents of the binder and the conductive material may be 1 wt% to 5 wt%, respectively, based on the total weight of the positive electrode active material layer.

The binder serves to well adhere the positive electrode active material particles to each other and also to well adhere the positive electrode active material to the current collector. Representative examples of the binder include polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon, and the like, but are not limited thereto.

The conductive material is used to impart conductivity to an electrode, and any electronic conductive material can be used as long as it does not cause chemical changes in the manufactured battery. Examples of the conductive material include carbon-based materials such as natural graphite, artificial graphite, carbon black, acetylene black, Ketjen black, and carbon fibers; metalbased materials such as metal powder or metal fibers of copper, nickel, aluminum, silver, and the like; conductive polymers such as polyphenylene derivatives; or conductive materials including mixtures thereof.

As the positive electrode current collector, an aluminum foil, a nickel foil, or a combination thereof may be used, but it is not limited thereto.

The negative electrode includes a current collector and a negative electrode active material layer formed on the current collector, and the negative electrode active material layer includes a negative electrode active material.

The negative electrode active material includes a material capable of reversibly intercalating/deintercalating lithium ions, lithium metal, an alloy of lithium metal, a material capable of doping and undoping lithium, or a transition metal oxide.

As the material capable of reversibly intercalating/deintercalating lithium ions, any carbon-based negative electrode active material generally used in lithium ion secondary batteries can be used as a carbon material, and representative examples thereof include crystalline carbon, amorphous carbon, or a combination thereof.

As the alloy of lithium metal, an alloy of lithium and a metal selected from the group consisting of Na, K, Rb, Cs, Fr, Be, Mg, Ca, Sr, Si, Sb, Pb, In, Zn, Ba, Ra, Ge, Al, and Sn may be used.

Examples of the material capable of doping and undoping lithium include Si, SiOₓ (0 < x < 2), a Si-Y alloy (where Y is an element selected from the group consisting of alkali metals, alkaline earth metals, Group 13 elements, Group 14 elements, transition metals, rare earth elements, and combinations thereof, but is not Si), Sn, SnO₂, a Sn-Y alloy (where Y is an element selected from the group consisting of alkali metals, alkaline earth metals, Group 13 elements, Group 14 elements, transition metals, rare earth elements, and combinations thereof, but is not Sn), and the like.

Examples of the transition metal oxide include vanadium oxide, lithium vanadium oxide, and the like. The negative electrode active material layer also includes a binder, and may optionally further include a conductive material.

The binder serves to well adhere the negative electrode active material particles to each other and also to well adhere the negative electrode active material to the current collector.

The conductive material is used to impart conductivity to an electrode, and any electronic conductive material can be used as long as it does not cause chemical changes in the manufactured battery.

As the current collector, one selected from the group consisting of a copper foil, a nickel foil, a stainless steel foil, a titanium foil, a nickel foam, a copper foam, a polymer substrate coated with a conductive metal, and a combination thereof may be used.

The negative electrode and the positive electrode are manufactured by mixing an active material, a conductive material, and a binder in a solvent to manufacture an active material composition, and coating the composition on a current collector. Since such an electrode manufacturing method is widely known in the field, a detailed description thereof will be omitted in this specification. As the solvent, N-methylpyrrolidone or the like may be used, but it is not limited thereto.

The electrolyte includes a non-aqueous organic solvent and a lithium salt.

The non-aqueous organic solvent serves as a medium through which ions involved in an electrochemical reaction of a battery can move.

The lithium salt is a material that dissolves in an organic solvent, acts as a source of lithium ions in a battery to enable basic lithium secondary battery operation, and serves to promote movement of lithium ions between a positive electrode and a negative electrode.

Depending on the type of lithium secondary battery, a separator may exist between the positive electrode and the negative electrode. As such a separator, polyethylene, polypropylene, polyvinylidene fluoride, or a multilayer film of two or more layers thereof may be used, and mixed multilayer films such as a polyethylene/polypropylene 2-layer separator, a polyethylene/polypropylene/polyethylene 3-layer separator, and a polypropylene/polyethylene/polypropylene 3-layer separator may be used.

Lithium secondary batteries can be classified into lithium ion batteries, lithium ion polymer batteries, and lithium polymer batteries depending on the types of separator and electrolyte used, and can be classified into cylindrical, prismatic, coin-type, pouch-type, and the like depending on the shape, and can be divided into bulk type and thin film type depending on the size. Since structures and manufacturing methods for these batteries are widely known in the field, detailed descriptions are omitted.

Preferred examples and comparative examples of the present invention will be described below. However, the following examples are only one preferred embodiment of the present invention, and the present invention is not limited to the following examples.

### Experimental Examples

### <Comparative Example 1>

### 1. Preparation of Precursor

A positive electrode active material precursor was prepared by a general co-precipitation method. NiSO₄·6H₂O was used as a nickel raw material, CoSO₄·7H₂O was used as a cobalt raw material, and MnSO₄·H₂O was used as a manganese raw material. These raw materials were dissolved in distilled water to prepare an aqueous metal salt solution.

After preparing a co-precipitation reactor, N₂ was purged to prevent oxidation of metal ions during the co-precipitation reaction. The reactor temperature was maintained at 50°C. NH₄(OH) was added as a chelating agent to the co-precipitation reactor, and NaOH was used for pH adjustment. The precipitate obtained according to the co-precipitation process was filtered, washed with distilled water, and then dried in a 180°C cake dryer to prepare a positive electrode active material precursor.

The composition of the prepared precursor was (Ni_{0.90}Co_{0.05}Mn_{0.05})(OH)₂, and the primary particles exhibited a plate-shaped form.

### 2. Preparation of Positive Electrode Active Material

### Preparation of positive electrode active material for a lithium secondary battery: First calcination

### <Preparation Example 1-1>

170.93 g of the positive electrode active material precursor prepared in step 1, 79.07 g of LiOH·H₂O, and ZrO₂ and Y₂O₃ as doping raw materials were each weighed and then uniformly mixed using a mixer, and calcination was performed in a box-type calcination furnace maintained in an O₂ atmosphere.

At this time, LiOH·H₂O was introduced such that the molar ratio (Li/Me) of lithium to the total metals in the metal precursor was 1.02. ZrO₂ was introduced such that the doping amount of Zr in the lithium metal oxide particles was 2500 ppm, and Y₂O₃ was introduced such that the doping amount of Y in the lithium metal oxide particles was 1200 ppm.

Thereafter, first calcination was performed at a temperature of 900°C for 4 hours to prepare a first calcinated product.

### <Preparation Example 1-2>

A positive electrode active material precursor and a first calcinated product were prepared in the same manner as in Comparative Example 1, except that the first calcination temperature was 880°C.

### <Preparation Example 1-3>

A positive electrode active material precursor and a first calcinated product were prepared in the same manner as in Comparative Example 1, except that the first calcination temperature was 860°C.

### <Preparation Example 1-4>

A positive electrode active material precursor and a first calcinated product were prepared in the same manner as in Comparative Example 1, except that the first calcination temperature was 840°C.

### <Preparation Example 1-5>

A positive electrode active material precursor and a first calcinated product were prepared in the same manner as in Comparative Example 1, except that the first calcination temperature was 820°C.

### <Preparation Example 1-6>

A positive electrode active material precursor and a first calcinated product were prepared in the same manner as in Comparative Example 1, except that the first calcination temperature was 800°C.

Table 1 below shows the average particle size (D₅₀), specific surface area (BET), Li/Ni (%), and fine powder values of 1 *µ*m or less before and after performing a 9-ton press according to the first calcination. At this time, the average particle size (D₅₀), specific surface area (BET), Li/Ni (%), and fine powder values of 1 *µ*m or less before and after the 9-ton press were measured by the following methods.

**Average particle size (D₅₀):** The average particle size (D₅₀) was measured through a Microtrac (S3000) instrument using a laser diffraction method. The volume-based average particle size (Dvso) can be defined as a particle size corresponding to 50% of a volume cumulative amount in a particle size distribution curve of particles.

**BET specific surface area:** The BET specific surface area was measured using a Brunauer-Emmett-Teller Analysis method based on a nitrogen adsorption method. The specific surface area of a material was measured by measuring the adsorption amount per partial pressure by adsorbing and desorbing nitrogen gas on the surface of a solid sample using the BET equation.

**Li/Ni cation mixing degree:** The cation mixing ratio of nickel cations in the lithium layer within the crystal structure of the metal oxide of the obtained calcinated product was measured through XRD. Specifically, raw data measured through XRD were Rietveld refined applying the above details, and the Ni1(3b) occupancy value was used for calculation.

**9-ton press:** 3 g of a sample was introduced into a 1.3 cm diameter mold and pressed at 9 tons. Particle size analysis was performed on the sample before and after pressing through a Malvern (MS3000) instrument using a laser diffraction method to calculate a sum of fine powder values of 1 *µ*m or less.

**[Table 1]**

| | First calcination | D50 | BET | Li/Ni | 9 ton press | | |
|---|---|---|---|---|---|---|---|
| | | | | | Before | After | Equation 2 |
| | [°C] | [*µ*m] | [m²/g] | [%] | [vol%] | [vol%] | |
| Preparation Example 1-1 | 900 | 4.06 | 0.35 | 3.1 | 0.00 | 0.71 | 0.71 |
| Preparation Example 1-2 | 880 | 3.62 | 0.40 | 2.2 | 0.65 | 0.95 | 0.3 |
| Preparation Example 1-3 | 860 | 3.18 | 0.45 | 2.0 | 0.88 | 1.92 | 1.04 |
| Preparation Example 1-4 | 840 | 3.13 | 0.56 | 1.5 | 1.50 | 4.05 | 2.55 |
| Preparation Example 1-5 | 820 | 3.57 | 0.64 | 1.2 | 2.51 | 9.86 | 7.35 |
| Preparation Example 1-6 | 800 | 3.84 | 0.65 | 1.1 | 2.96 | 14.58 | 11.62 |

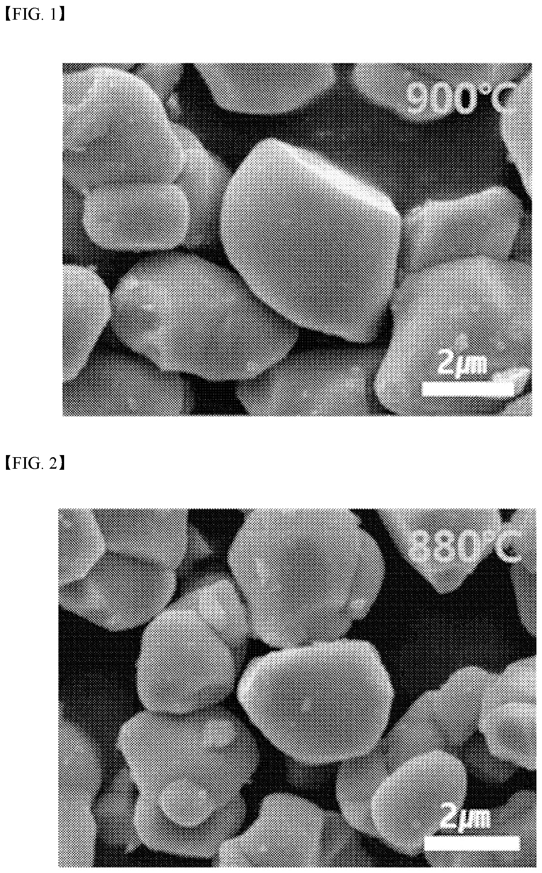

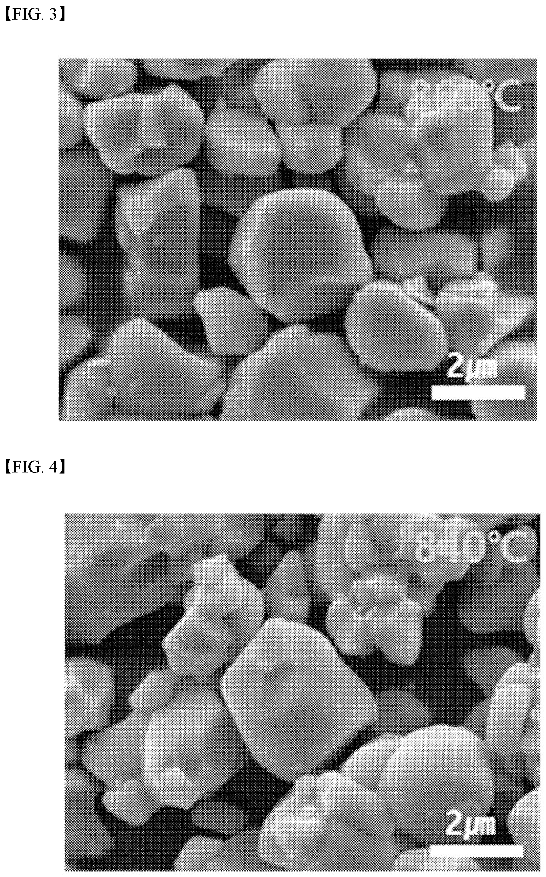

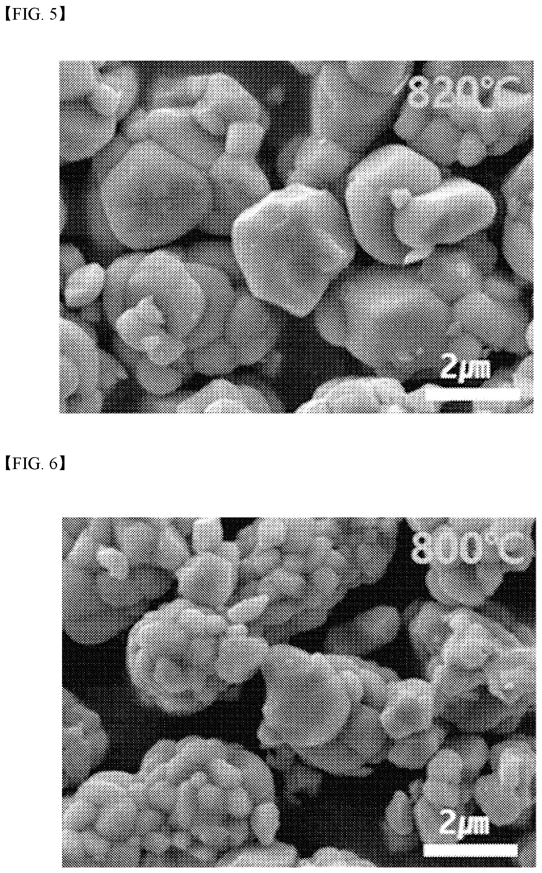

Results observed using SEM are shown in FIGS. 1 to 6. Referring to FIGS. 1 to 6 and Table 1, it was confirmed that when the first calcination step is performed at temperatures of 840 and 860 °C as in Preparation Examples 1-3 and 1-4, single particles exhibiting a Li/Ni mixing degree of 1.5 to 2.0% are produced, and a first calcinated product having an average particle size (D₅₀) that is not excessively large or small can be obtained.

In contrast, it was confirmed that in Preparation Examples 1-1 and 1-2, in which the first calcination temperature was excessively higher than 860 °C, overgrown particles were produced, and in Preparation Examples 1-5 and 1-6, in which the first calcination temperature was excessively lower than 840 °C, undergrown particles were produced.

### Manufacture of positive electrode active material for lithium secondary battery: Pulverization and deagglomeration

### <Preparation Example 2-1>

Thereafter, the first calcinated product manufactured according to Preparation Example 1-4 was cooled from room temperature to a temperature of 80 °C, and then ground and deagglomerated using a jet mill under a condition of 3.0 Bar, respectively.

### <Preparation Example 2-2>

Thereafter, the first calcinated product manufactured according to Preparation Example 1-4 was cooled from room temperature to a temperature of 80 °C, and then ground and deagglomerated using a jet mill under a condition of 3.5 Bar, respectively.

### <Preparation Example 2-3>

Thereafter, the first calcinated product manufactured according to Preparation Example 1-4 was cooled from room temperature to a temperature of 80 °C, and then ground and deagglomerated using a jet mill under a condition of 4.0 Bar, respectively.

Table 2 below shows the average particle size (D₅₀) and specific surface area (BET) of the deagglomerated products when jet mill conditions were controlled according to Preparation Examples 2-1 to 2-3.

**[Table 2]**

| | Jet mill (Bar) | D₅₀ (*µ*m) | BET (m²/g) |
|---|---|---|---|
| Preparation Example 2-1 | 3.0 | 3.17 | 0.50 |
| Preparation Example 2-2 | 3.5 | 3.05 | 0.56 |
| Preparation Example 2-3 | 4.0 | 2.84 | 0.57 |

Referring to Table 2, it was confirmed that when the jet mill was performed at a pressure of 4.0 Bar or higher, the average particle diameter of the deagglomerated product was controlled to a range of 2.5 to 3.0 µm and the specific surface area was high, thereby promoting particle growth during the second calcination. In contrast, it was confirmed that when the jet mill was performed at a pressure lower than 4.0 Bar, as in Preparation Examples 2-1 and 2-2, the average particle diameter and the specific surface area of the deagglomerated product were outside the scope of the present invention.

### Manufacture of positive electrode active material for lithium secondary battery: Examples

Positive electrode active materials for a lithium secondary battery according to Examples 1 to 3 were manufactured by performing a second calcination of the metal oxide manufactured according to Preparation Example 2-3 at a calcination temperature of 770 °C for 9 hours.

### Manufacture of positive electrode active material for lithium secondary battery: Comparative Examples

A mixture was formed by introducing a plate-shaped metal hydroxide precursor manufactured according to the Preparation Example, LiOH·H₂O, and ZrO₂ and Y₂O₃ as doping elements into a mixer and mechanically mixing the same. At this time, LiOH·H₂O, ZrO₂, and Y₂O₃ were introduced in the same manner as in the aforementioned first calcination step. Specifically, a single calcination was performed at a temperature of 840 °C for 4 hours and at a temperature of 770 °C for 9 hours for a total of 13 hours, followed by cooling from room temperature to a temperature of 50 °C and then grinding and deagglomerating using a jet mill at a pressure of 3.0 Bar to obtain a positive electrode active material for a lithium secondary battery.

### Manufacture of lithium secondary battery

In order to investigate the electrochemical characteristics of the positive electrode active materials for a lithium secondary battery manufactured according to the Examples and the Comparative Examples, lithium secondary batteries were manufactured using the same. A slurry for manufacturing an electrode plate was mixed in a ratio of the manufactured positive electrode active material : conductive material (carbon black, Super C) : binder (PVDF, KF1120) = 96.5 : 1.5 : 2 wt%, and N-methyl-2-pyrrolidone (NMP) was added to adjust the viscosity such that a solid content was about 70%. The manufactured slurry was coated on an Al foil having a thickness of 20 µm using a doctor blade, followed by drying and rolling. An electrode loading amount was 16.7 mg/cm², and a press density (at 25 °C) was 3.5 g/cm³. An electrolyte used was 1M LiPF₆ in EC:DMC:EMC=3:4:3 (vol%), to which 3.0 wt% of VC, 0.5 wt% of PS, and 1.0 wt% of ESA were added based on the total weight of the electrolyte. A coin cell was manufactured using a PP separator and a lithium negative electrode (200 µm, Welcos).

### <Evaluation Example 1>

Table 3 below shows particle diameters (Volume and Number), PD (Press Density), specific surface area (BET), compression density, and fine powder values of 1 µm or less before and after performing a 9-ton press for the positive electrode active materials of the Examples and the Comparative Examples. The average particle diameter, residual lithium content, and electrochemical characteristics were measured by the following methods.

**Particle diameter (Dmin, D₅₀, Dmax):** Dmin, D₅₀, and Dmax were measured through a Microtrac (S3000) instrument using a laser diffraction method. Specifically, Dmin, D₅₀, and Dmax were defined as particle diameters corresponding to a minimum value, 50%, and a maximum value, respectively, according to a volume cumulative amount (%) and a number cumulative amount (%) in a particle diameter distribution curve of particles based on volume and number.

**BET specific surface area:** The BET specific surface area was measured using a Brunauer-Emmett-Teller Analysis method based on a nitrogen adsorption method. The specific surface area of a material was measured by calculating an adsorption amount per partial pressure by adsorbing and desorbing nitrogen gas on a surface of a solid sample using the BET equation.

**Press Density (PD) (g/cc):** The press density was measured by weighing 10 g of each obtained calcinated product and then pressing the same twice at 108N.

**9-ton press:** 3 g of a sample was introduced using a 1.3 cm diameter mold and pressed at 9 tons. Particle size analysis was performed on the sample before and after pressing through a Malvern (MS3000) instrument using a laser diffraction method to calculate a sum of fine powder values of less than 1 *µ*m.

**[Table 3]**

| | Calcination Temperature | PD | BET | PSD | | | | | | 9 ton press | | |
|---|---|---|---|---|---|---|---|---|---|---|---|---|
| | | | | Volume(*µ*m) | | | Number(*µ*m) | | | | | |
| | (°C) | (g/cc) | (m2/g) | Dmin | D50 | Dmax | Dmin | D50 | Dmax | Before | After | Gap |
| Example | (Second calcination) 790 | 2.068 | 0.45 | 2.05 | 4.75 | 11.48 | 1.70 | 3.26 | 7.33 | 0.72 | 1.74 | 1.02 |
| C-Example | (Single calcination)840 / 770 | 1.982 | 0.61 | 1.36 | 3.45 | 10.92 | 1.01 | 2.28 | 9.16 | 1.31 | 2.77 | 1.46 |

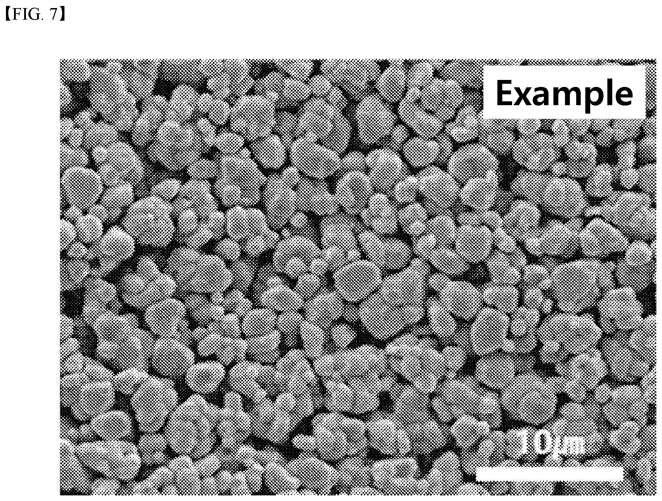

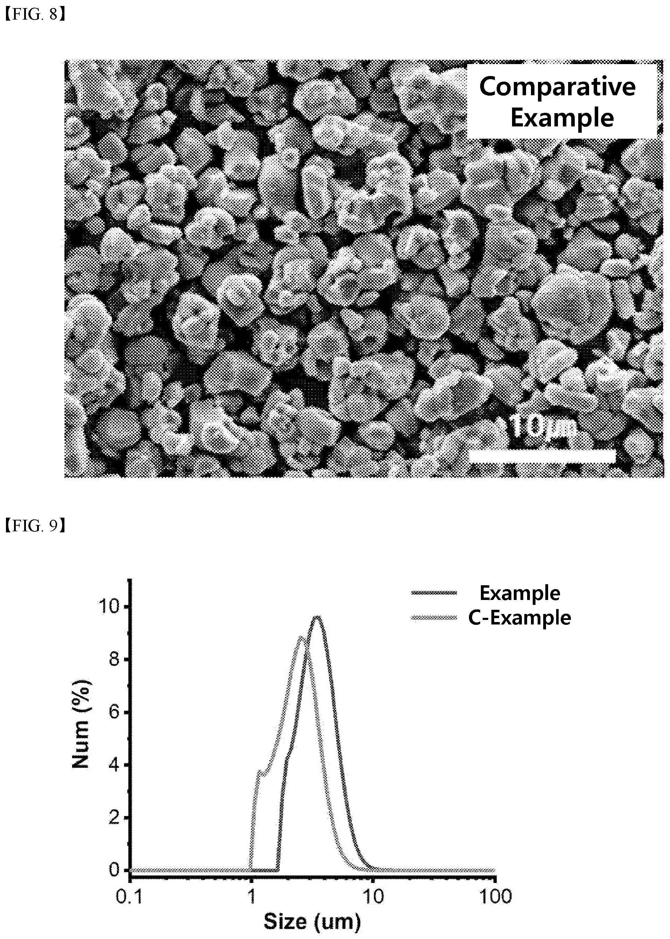

Further, results of observing the positive electrode active materials for a lithium secondary battery prepared according to the Examples and the Comparative Examples using SEM are shown in FIGS. 7 and 8, respectively, and FIG. 9 shows particle size distribution diagrams of the positive electrode active materials prepared according to the Examples and the Comparative Examples.

Referring to FIGS. 7, 8, and 9 and Table 3, it was confirmed that the Examples exhibited excellent particle growth even under the same conditions compared to the Comparative Examples, and that particle uniformity was improved due to a reduced number of agglomerated particles. In addition, it was confirmed that since a ratio of fine powder of 1 µm or less was low, an increase and a relative ratio of the fine powder were low even after the 9-ton press, thereby improving a single-particle degree.

### Manufacture of positive electrode plate for lithium secondary battery

In order to investigate roughness characteristics of the electrode surfaces of the positive electrode active materials for a lithium secondary battery prepared according to the Examples and the Comparative Examples, a positive electrode plate for a lithium secondary battery was manufactured as follows.

A slurry for manufacturing an electrode plate was mixed in a ratio of the prepared positive electrode active material : conductive material (carbon black, Super C) : binder (PVDF, KF1120) = 96.5 : 1.5 : 2 wt%, and N-methyl-2-pyrrolidone (NMP) was added to adjust the viscosity such that a solid content was about 70%. The prepared slurry was coated on an Al foil having a thickness of 20 µm using a doctor blade, followed by drying.

### <Evaluation Example 2-1>: First roughness

Table 4 below shows the results of measuring the first roughness of the positive electrode active materials of the Examples and the Comparative Examples. The first roughness was measured by the following method.

**First roughness (*µ*m):** refers to a value obtained by measuring a roughness of an electrode surface in a randomly selected area of 40 µm × 40 µm.

Specifically, Table 4 shows measured values of Min (*µ*m), Max (*µ*m), Mid (*µ*m), Mean (*µ*m), Rpv (*µ*m), Rq (*µ*m), Ra (*µ*m), and Rz (*µ*m) for the first roughness, and the respective definitions are as follows.

**Min (*µ*m):** Min (*µ*m) refers to a minimum height, and means a point having the highest value among measured values.

**Max (*µ*m):** Max (*µ*m) refers to a maximum height, and means a point having the lowest value among measured values.

**Mid (*µ*m):** refers to an average of the Min (*µ*m) and Max (*µ*m) values.

**Mean (*µ*m):** refers to a value obtained by summing heights of all points of measured values and then dividing the sum by the number of points.

**Rpv (*µ*m):** refers to a difference between the Max (*µ*m) and Min (*µ*m) values.

**Rq (*µ*m):** Rq (*µ*m) refers to a root-mean-square roughness, and means a square root of a value obtained by summing all squared height values and then dividing the sum by a line length.

**Ra (*µ*m):** Ra refers to an average roughness, and means a sum of absolute values of heights of a surface profile in a measurement section, that is, an area between an actual surface and a center line.

**Rz (*µ*m):** Rz refers to a ten-point average roughness, and means an average of values obtained by adding depths of the five lowest valleys to heights of the five highest peaks measured in the entire measurement section.

**[Table 4]**

| | Min | Max | Mid | Mean | Rpv | Rq | Ra | Rz |
|---|---|---|---|---|---|---|---|---|
| | (*µ*m) | (*µ*m) | (*µ*m) | (*µ*m) | (*µ*m) | (*µ*m) | (*µ*m) | (*µ*m) |
| Example | -4.522 | 2.098 | -1.212 | 0.000 | 6.620 | 0.902 | 0.716 | 6.401 |
| C-Example | -5.255 | 4.145 | -0.555 | 0.000 | 9.400 | 1.496 | 1.209 | 9.116 |

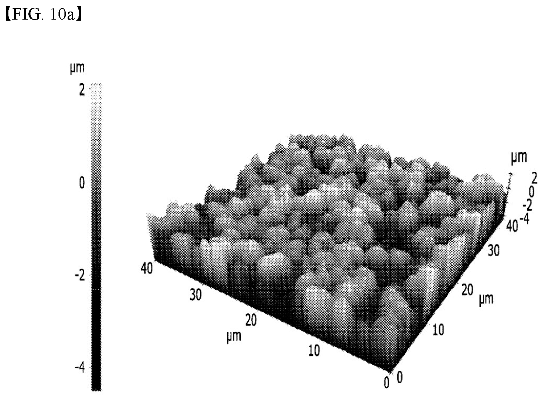

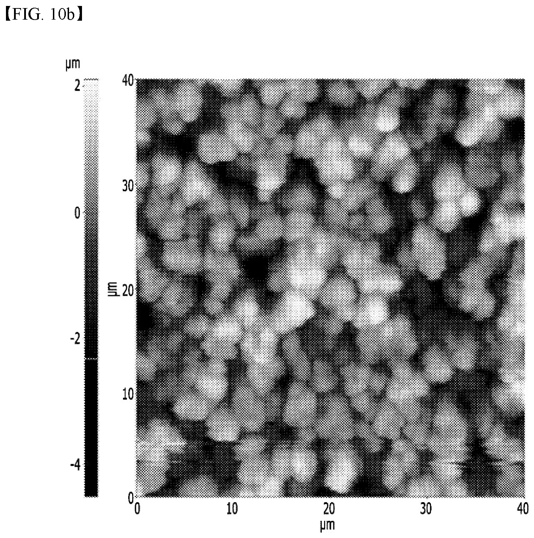

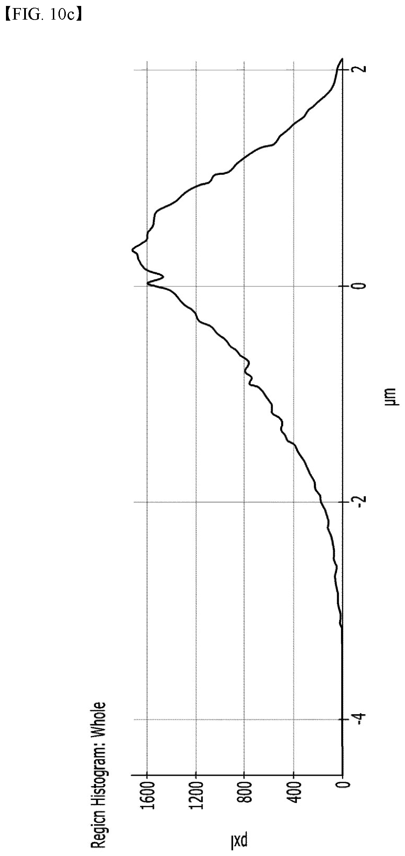

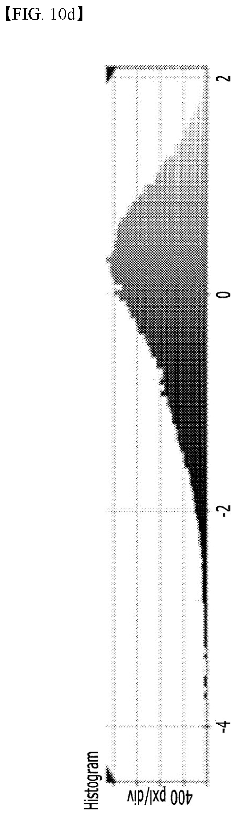

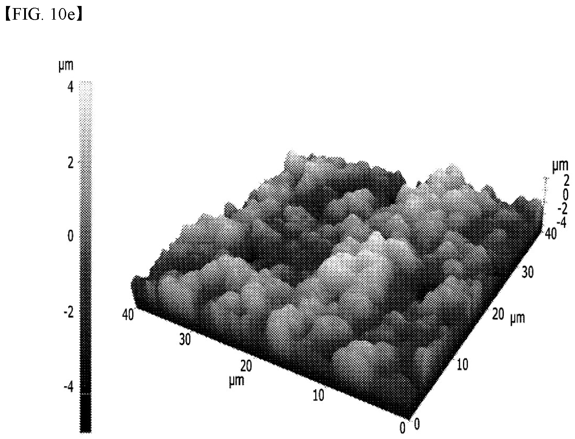

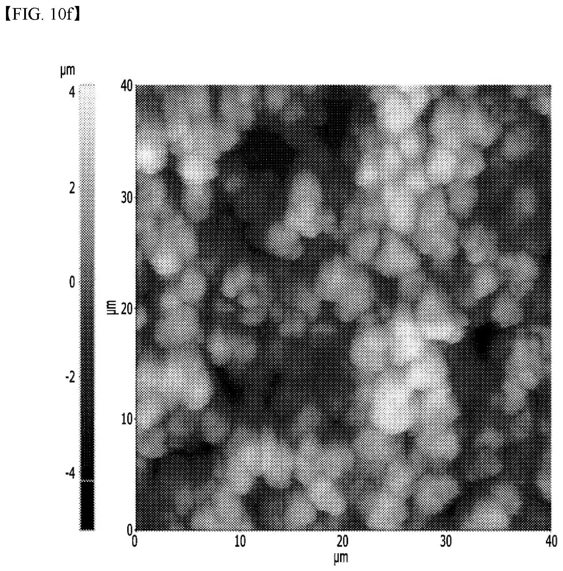

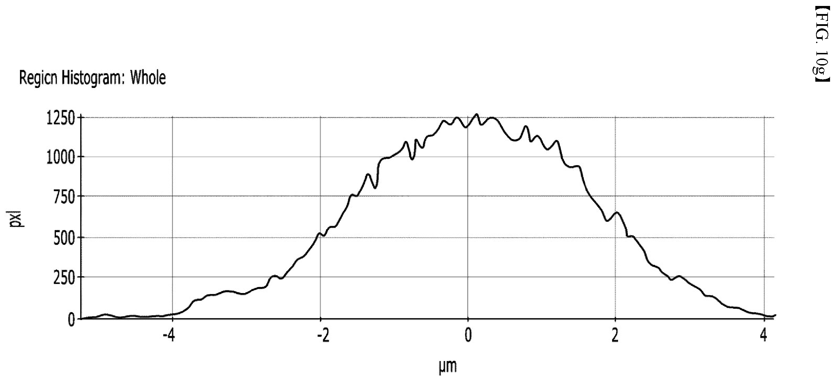

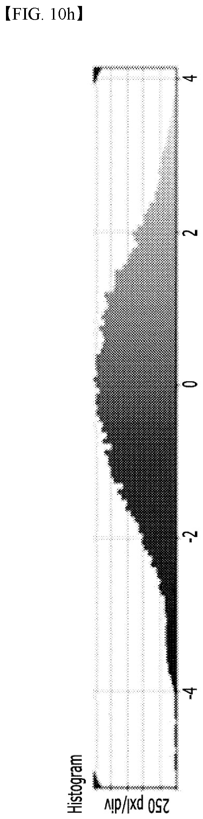

FIGS. 10a to 10d show a first roughness as an electrode surface roughness measured by an Atomic Force Microscope (AFM) in a randomly selected area of 40 *µ*m × 40 *µ*m on an electrode of an Example, and FIGS. 10e to 10h show a first roughness as an electrode surface roughness measured by an AFM in a randomly selected area of 40 *µ*m × 40 *µ*m on an electrode of a Comparative Example.

Referring to FIGS. 10a to 10h and Table 4, regarding the electrode surface roughness, it was confirmed that surface roughness index values of the Examples were low as compared to the Comparative Examples, indicating excellent particle uniformity, active material filling degree, and density of the electrodes.

### <Evaluation Example 2-2>: Second roughness

Table 5 below shows results of measuring a second roughness of the positive electrode active materials of the Examples and the Comparative Examples. The second roughness was measured by the following method.

**Second roughness (*µ*m):** A roughness was measured for one single particle in an electrode state.

**[Table 5]**

| | | Min | Max | Mid | Mean | Rpv | Rq | Ra |
|---|---|---|---|---|---|---|---|---|
| | | (*µ*m) | (*µ*m) | (*µ*m) | (*µ*m) | (*µ*m) | (*µ*m) | (*µ*m) |
| Example | 1 line | 1.495 | 1.740 | 1.593 | 1.540 | 0.294 | 0.103 | 0.088 |
| | 2 line | 0.929 | 1.448 | 1.188 | 1.284 | 0.519 | 0.165 | 0.134 |
| | 3 line | 1.037 | 1.467 | 1.252 | 1.306 | 0.430 | 0.148 | 0.127 |
| | 4 line | 1.656 | 2.047 | 1.645 | 1.905 | 0.397 | 0.151 | 0.135 |
| C-Example | 1 line | 1.165 | 3.305 | 2.235 | 2.553 | 2.140 | 0.557 | 0.554 |
| | 2 line | 1.426 | 2.862 | 2.144 | 2.279 | 1.436 | 0.461 | 0.410 |
| | 3 line | 1.701 | 3.157 | 2.49 | 2.646 | 1.456 | 0.448 | 0.371 |
| | 4 line | 1.620 | 2.628 | 2.124 | 2.222 | 1.008 | 0.282 | 0.220 |

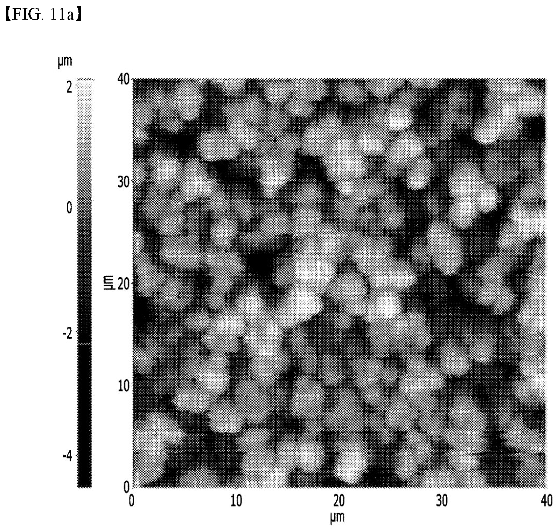

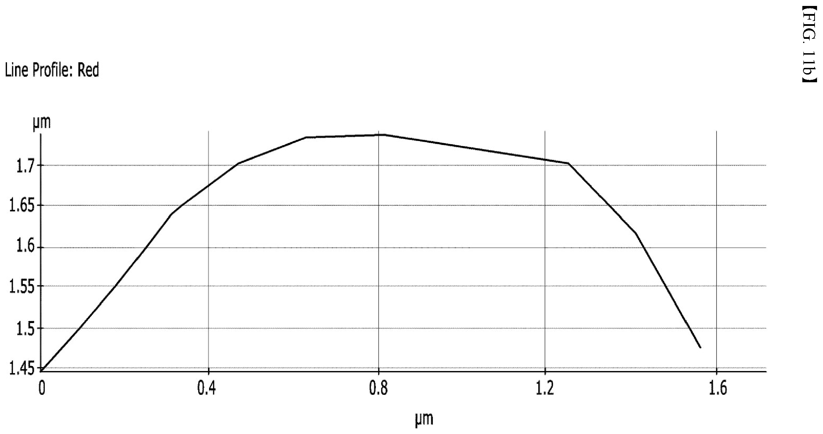

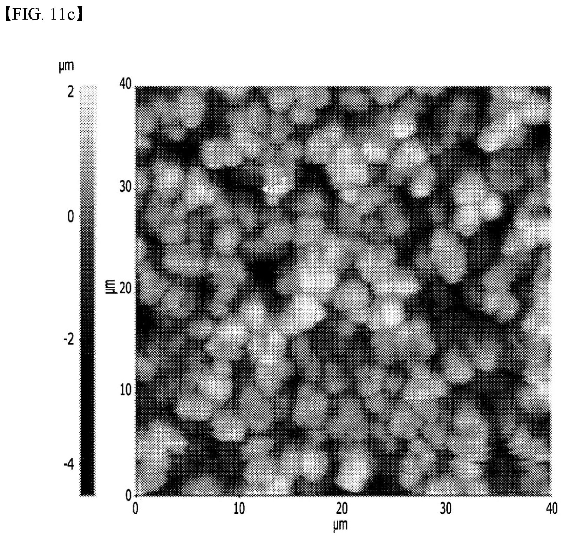

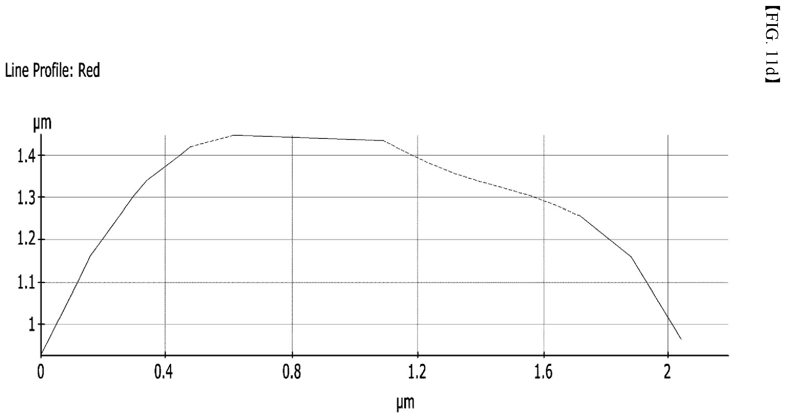

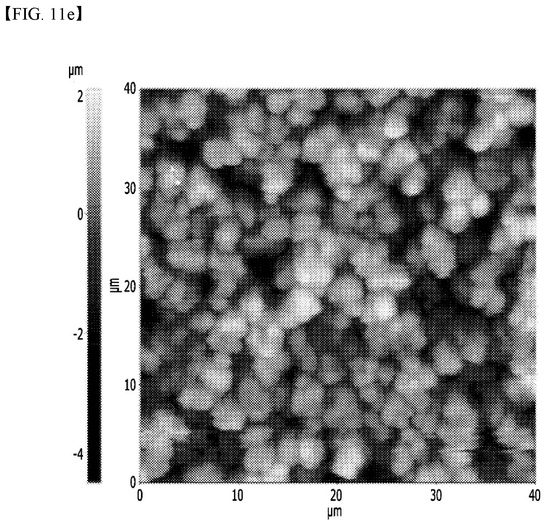

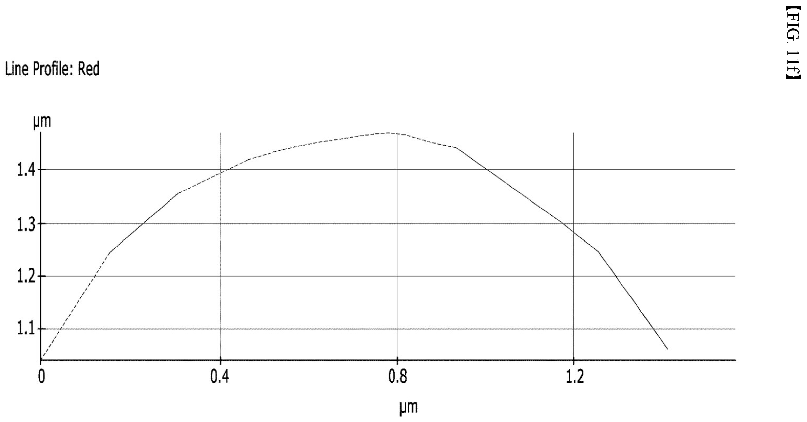

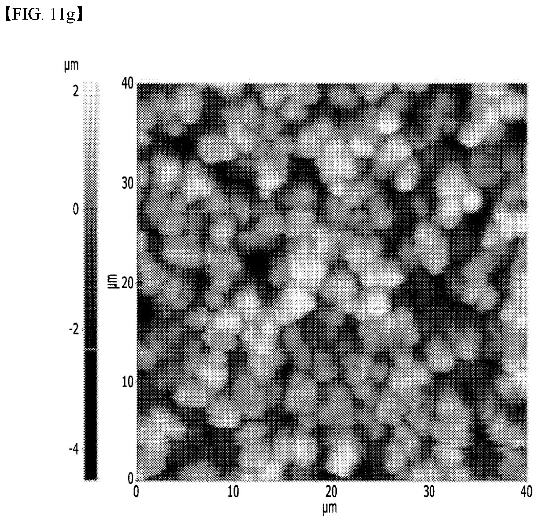

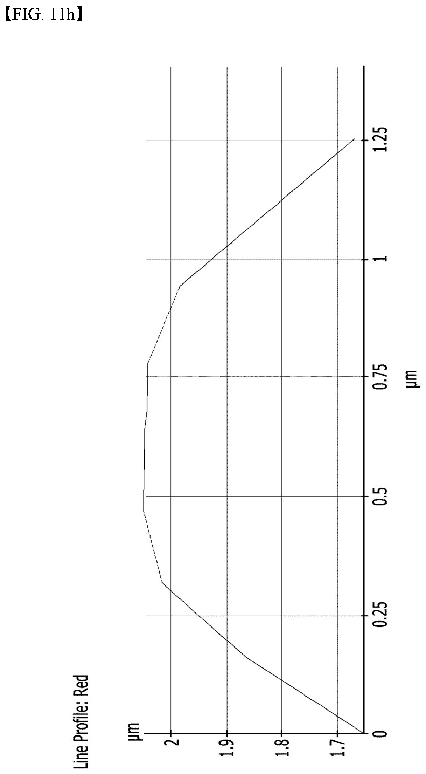

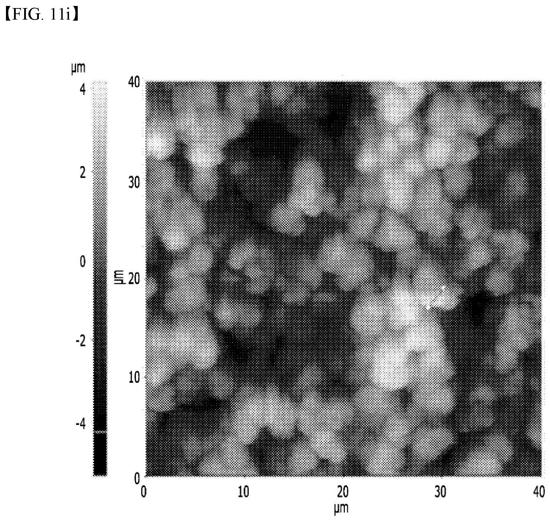

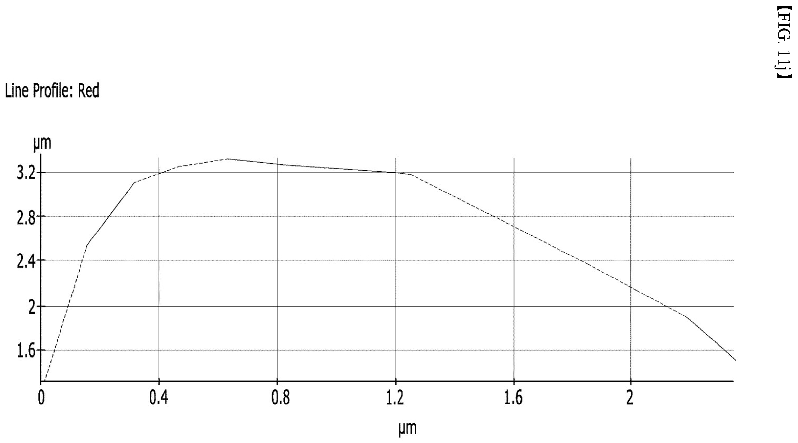

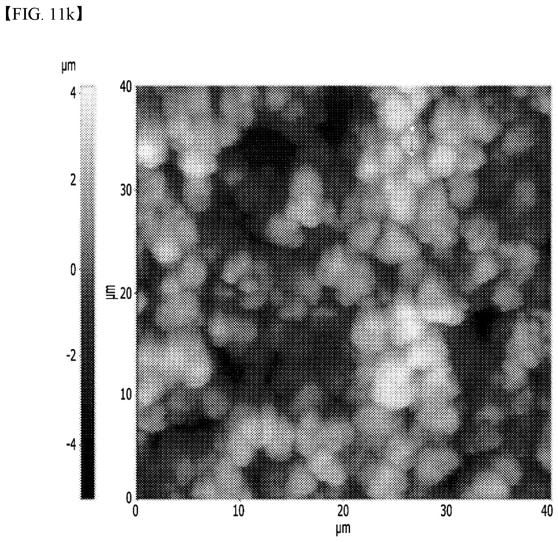

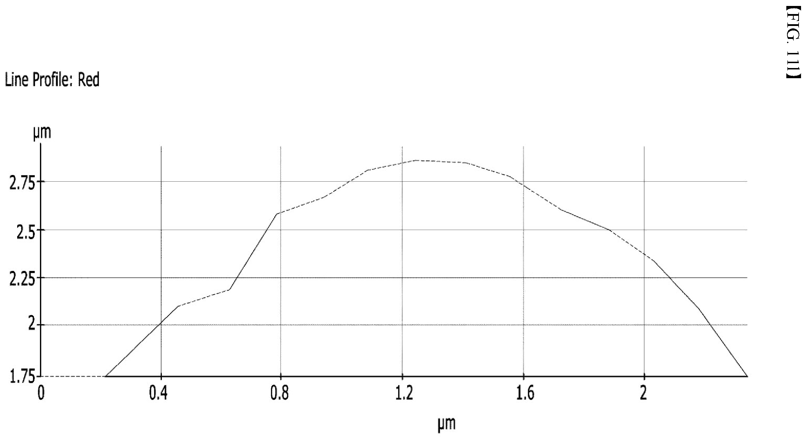

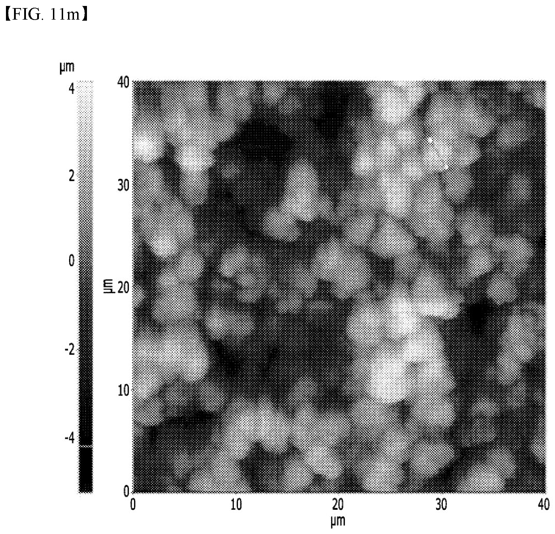

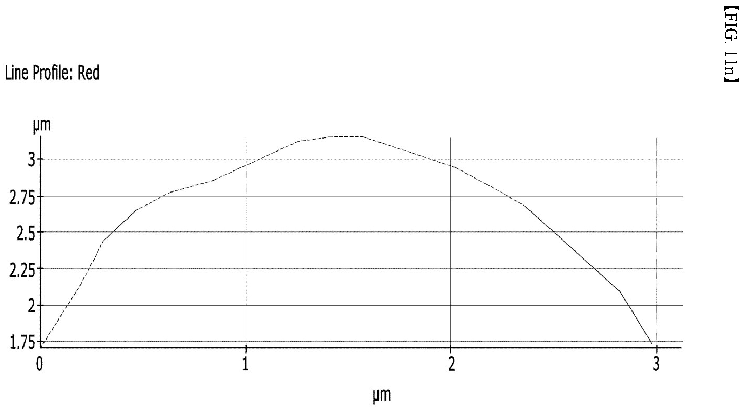

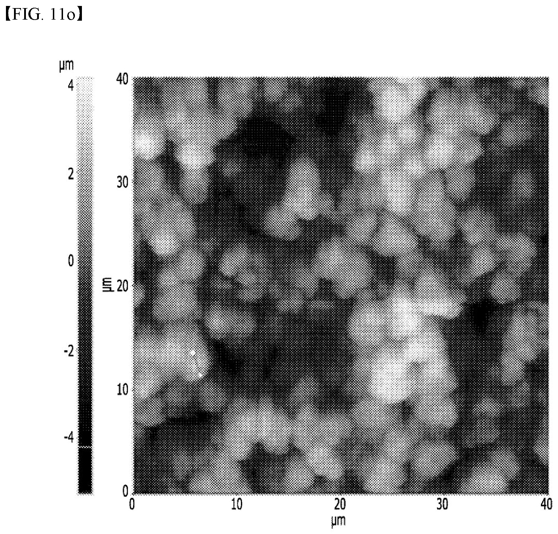

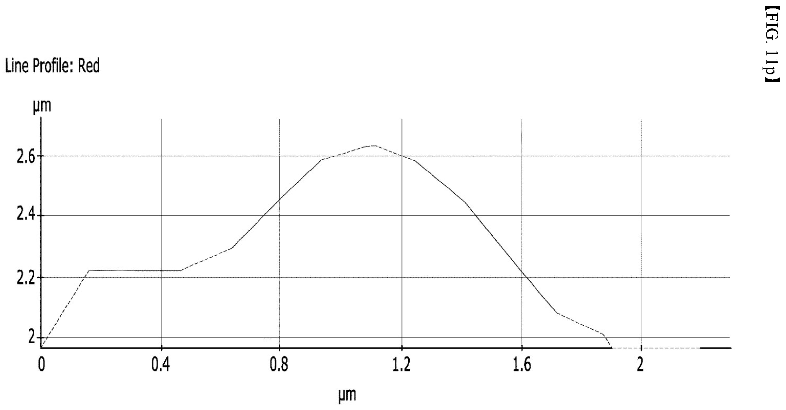

FIGS. 11a and 11b, FIGS. 11c and 11d, FIGS. 11e and 11f, FIGS. 11g and 11h, FIGS. 11i and 11j, FIGS. 11k and 111, FIGS. 11m and 11n, and FIGS. 11o and 11p show the roughnesses of the active material measured by an Atomic Force Microscope (AFM) according to lines 1 to 4 of the Examples and lines 1 to 4 of the Comparative Examples, respectively. The first line to the fourth line represent the roughnesses of a single particle of the active material in the Examples and the Comparative Examples, respectively.

Referring to FIGS. 11a to 11p and Table 5, for the particles of the active material, specifically for a single particle in the electrode state, it was confirmed that the particle roughness index values of the Examples were lower as compared to the Comparative Examples. Accordingly, particle growth can be confirmed, and a loading amount and a mixture density can be increased during electrode manufacturing.

### Manufacture of Lithium Secondary Battery

In order to investigate the electrochemical characteristics of the positive electrode active materials for a lithium secondary battery manufactured according to the Examples and the Comparative Examples, lithium secondary batteries were manufactured using the same.

In the lithium secondary battery, the electrode plate manufactured in Evaluation Example 2 was used. The electrolyte used was 1M LiPF₆ in EC:DMC:EMC=3:4:3 (vol%), to which 3.0 wt% of VC, 0.5 wt% of PS, and 1.0 wt% of ESA were added based on the total weight of the electrolyte. A coin cell was manufactured using a PP separator and a lithium **negative electrode** (200 µm, Welcos).

### (1) Evaluation of Initial Capacity and Initial Efficiency

After manufacturing a lithium secondary battery half-cell, it was aged at 25°C for 12 hours, and then a charge/discharge test was performed at 25°C. For the evaluation of the initial capacity, 200 mAh/g was used as a reference capacity, and the cell was charged to 4.3V at a constant current of 0.1C and then switched to a constant voltage until the end current reached 0.05C. After a rest time of 10 minutes after charging, discharging was performed at a constant current of 0.1C based on 200 mAh/g as a reference capacity until reaching 3.0V.

### (2) Evaluation of High-Temperature Cycle Life Characteristics

After manufacturing a lithium secondary battery half-cell, it was charged to 4.3V at a constant current of 0.5C at 45°C and then switched to a constant voltage until the end current reached 0.05C. After a rest time of 10 minutes after charging, discharging was performed at a constant current of 1.0C until reaching 3.0V. Under such charge/discharge cycle conditions, 30 cycles of charging and discharging were performed, and the capacity retention of the 30th cycle relative to the first cycle was calculated.

**[Table 6]**

| | Loading value | Mixture density | 0.1C/0.1C | | | 0.5C/1C |
|---|---|---|---|---|---|---|
| | | | Initial Cycle @25°C | | | 30 Cycle @45°C |
| | mg/cm² | g/cc | Charge (mAh/g) | Discharge (mAh/g) | Efficiency (%) | Retention (%) |
| Example | 16.84 | 3.49 | 240.2 | 214.8 | 89.4% | 93.3% |
| C-Example | 12.71 | 3.18 | 232.7 | 205.1 | 88.1% | 90.7% |

Referring to the uniformity and roughness of the active material, the electrode surface roughness in Tables 3, 4, and 5, FIG. 9, and FIGS. 10a to 10g, and FIGS. 11a to 11p, and the results in Table 6, it was confirmed that the Examples exhibit higher loading values and Electrode densities compared to the Comparative Examples. Accordingly, high energy density batteries can be manufactured, and it was confirmed that charge/discharge capacity, initial efficiency, and cycle life characteristics are excellent.

In this regard, the Comparative Examples represent a conventional process in which a final product is formed of broken single particles through grinding and deagglomeration after a single calcination. In contrast, the Examples follow a process in which grinding and deagglomeration are performed after a first calcination, followed by a second calcination, and the broken single particles are further grown during the second calcination.

Due to such process differences, the particle growth and uniformity of the Comparative Examples may be inferior to those of the Examples. Accordingly, it was confirmed that the roughness of the Examples during electrode manufacturing is lower than the roughness of the Comparative Examples, resulting in higher loading values and mixture densities when the final product is manufactured into a battery. Thus, high energy density batteries can be manufactured, and it was confirmed that the charge/discharge capacity, initial efficiency, and cycle life characteristics are excellent.

While the preferred embodiments have been described in detail above, the scope of the rights of the present invention is not limited thereto, and various modifications and improvements made by those skilled in the art using the basic concepts defined in the following claims also fall within the scope of the rights of the present invention.

## Claims

1. A positive electrode material for a lithium secondary battery, comprising a positive electrode active material including lithium metal oxide particles including lithium, nickel, cobalt, and manganese, wherein in a first roughness measured as an average value of the active material in a randomly selected area of 40 µm × 40 µm, an average roughness (Ra) of a surface of the positive electrode material is 1.0 µm or less.

2. The positive electrode material for a lithium secondary battery of claim 1, wherein in the first roughness, an Rpv (peak to valley ratio) is 9.0 µm or less.

3. The positive electrode material for a lithium secondary battery of claim 1, wherein in the first roughness, a root-mean-square roughness (Rq) is 1.20 µm or less.

4. The positive electrode material for a lithium secondary battery of claim 1, wherein in a second roughness measured for an individual single particle in an electrode state, an average roughness (Ra) of the surface of the positive electrode material is 0.20 µm or less.

5. The positive electrode material for a lithium secondary battery of claim 1, wherein in a second roughness measured for an individual single particle in an electrode state, an Rpv (peak to valley ratio) is 0.90 µm or less.

6. The positive electrode material for a lithium secondary battery of claim 1, wherein in a second roughness measured for an individual single particle in an electrode state, a root-mean-square roughness (Rq) is 0.25 µm or less.

7. The positive electrode material for a lithium secondary battery of claim 1, satisfying the following Equation 1: $A - B \leq 1.30$ (In Equation 1, A is a sum of fine powder values of 1 µm or less after pressing when 3 g of a sample of the positive electrode active material is introduced into a 1.3 cm diameter mold and pressed at 9 tons, and B is a sum of fine powder values of 1 µm or less before pressing.)

8. The positive electrode material for a lithium secondary battery of claim 1, wherein an average particle diameter (D₅₀) is 4.0 to 5.0 µm.

9. The positive electrode material for a lithium secondary battery of claim 1, wherein a specific surface area is 0.40 to 0.55 m²/g.

10. The positive electrode material for a lithium secondary battery of claim 1, which is a single particle.

11. The positive electrode material for a lithium secondary battery of claim 1, wherein a content of the nickel is 0.85 mol or more based on 1 mol of a total of the nickel, manganese, and doping elements.
